(19) Europäisches Patentamt / European Patent Office / Office européen des brevets

(11) **EP 4 530 663 A1**

(12) **EUROPEAN PATENT APPLICATION**

(43) Date of publication:
02.04.2025 Bulletin 2025/14

(21) Application number: 24153204.3

(22) Date of filing: 22.01.2024

(51) International Patent Classification (IPC):
*G01S 7/40* (2006.01)     *G01S 13/42* (2006.01)

(52) Cooperative Patent Classification (CPC):
G01S 7/4021; G01S 13/0209; G01S 13/42;
G01S 7/006

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 IN 202341065580

(71) Applicant: NXP B.V.
5656 AG Eindhoven (NL)

(72) Inventors:
• Tertinek, Stefan
5656AG Eindhoven (NL)
• Küchler, Wolfgang
5656AG Eindhoven (NL)
• Sethuraman, Prasanna Kumar
5656AG Eindhoven (NL)

(74) Representative: Krott, Michel
NXP Semiconductors
Intellectual Property Group
High Tech Campus 60
5656 AG Eindhoven (NL)

Remarks:
Amended claims in accordance with Rule 137(2) EPC.

(54) **RADAR DEVICE WITH SELF-INTERFERENCE BASED COMPENSATION**

(57) There is described a radar device (100), comprising:
i) a transmitter (110), configured to transmit an RF signal;
ii) a first receiver (120), configured to receive a first reflection of the RF signal;
iii) a second receiver (130), configured to receive a second reflection of the RF signal; and
iv) a control device, configured to:
a) determine a first target phase ($\Phi1$) and a first self-interference phase ($\Phi1^{SI}$) with respect to the first reflection of the RF signal, and
compensate for a first variation in the first target phase ($\Phi1$) based on the first self-interference phase ($\Phi1^{SI}$) to obtain a compensated first target phase,
b) determine a second target phase ($\Phi2$) and a second self-interference phase ($\Phi2^{SI}$) with respect to the second reflection of the RF signal, and

compensate for a second variation in the second target phase ($\Phi2$) based on the second self-interference phase ($\Phi2^{SI}$) to obtain a compensated second target phase.
Hereby, the first variation is different from the second variation.

$$\phi_1^{SI} = \omega(\tau_0 + \tau_1)$$
$$\phi_1 = \omega(\tau_0 + \tau + \tau_1)$$
$$\phi_2^{SI} = \omega(\tau_0 + \tau_{SI} + \tau_2)$$
$$\phi_2 = \omega(\tau_0 + \tau + \Delta\tau + \tau_2)$$

$$PDoA = \omega\Delta\tau = (\phi_2 - \phi_1) - (\phi_2^{SI} - \phi_1^{SI}) + \omega\tau_{SI}$$

Fig. 1

EP 4 530 663 A1

**Description**

TECHNICAL FIELD

The present disclosure relates to a radar device with a transmitter and at least two receivers, in particular to determine a phase difference of arrival (PDoA) and/or an angle of arrival (AoA). The radar device is configured to compensate for a receiver variation (e.g. time delay and/or phase variation) based on a self-interference effect. The disclosure further relates to a method of compensating a variation in a radar system, and a specific use of a self-interference peak in a channel impulse response (CIR) in order to compensate for such a variation.

The disclosure may hence relate to the technical field of radar devices, in particular ultra-wide band (UWB) applications.

TECHNICAL BACKGROUND

Radar operations apply radio frequency (RF) signals/waves to determine properties such as distance, angle, or velocity of a target (object or person or vehicle of interest). Thereby, a transmitter emits an RF signal towards the target, while one or more receivers obtain a reflection (an echo) of the RF signal that has been reflected by the target. The ultra-wideband (UWB) wireless technology that enables secure, accurate ranging with less than 5 cm accuracy, can also be utilized as a radar device for receiving reflected signals from a target.

For example, an UWB device can be used as an impulse radar, where a short duration pulse is transmitted, and its reflection is received. This reflection is captured as change in the channel impulse response (CIR) measured by the receiver. With multiple receivers whose corresponding antennas are separated by e.g. half wavelength, the AoA can be estimated by computing the PDoA between the CIR values of both receivers, at the tap index where the reflected signal is detected.

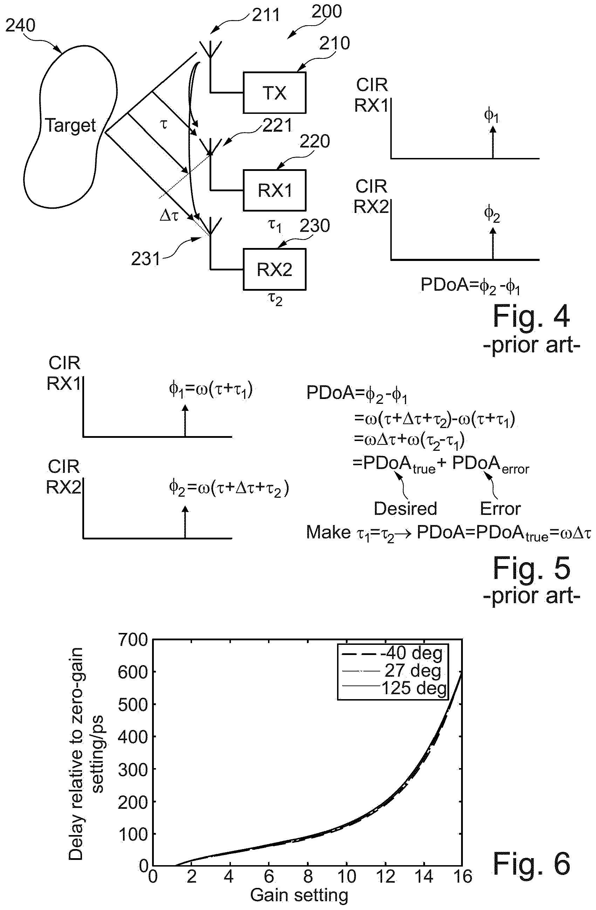

In a conventional ultra-wideband radar system 200, as shown in **Figure 4,** a transmitter 210 radiates a sequence of short pulses into the environment, which are reflected from a nearby target 240. A first receiver 220 collects the target reflections via a first antenna 221 and determines a complex-valued channel impulse response (CIR), where the target is visible as a peak (with associated phase Φ1) at a specific CIR tap (CIR RX1). To determine the direction (angle-of-arrival, AoA) at which the target 240 is located, a second receiver 230 receives the reflections via a second, physically separate, antenna 231, where the target 240 is again visible as a peak (associated with phase Φ2) at essentially the same CIR tap (CIR RX2). Due to the path difference, however, the time it takes for the reflection to arrive at each antenna 221, 231 will not only comprise a common delay $\tau$ but also a delay difference $\Delta\tau$. This delay difference, in turn, will cause a difference in the phases, Φ1 and Φ2, associated with the target peaks. By computing the phase difference of arrival:

$$\mathrm{PDoA} = \Phi 2 - \Phi 1,$$

the angle of arrival can be obtained as

$$\mathrm{AoA} = \arcsin((\lambda/L)^* (\mathrm{PDoA} / 2\pi)),$$

where L is the physical antenna separation and $\lambda$ is the wavelength of the carrier signal.

However, a drawback of conventional radar systems may be seen in that each receiver 220, 230 has its own (group) delay, as indicated by $\tau 1$ and $\tau 2$ in Figure 4. This delay will vary with process (i.e. different receivers will have different delays) and with receiver gain settings. In other words, each receiver 220, 230 may have a device-specific variation, characteristic for this particular receiver.

If left uncompensated, said variation, e.g. the additional delay difference, can cause a PDoA distortion, leading to a wrong AoA result. An example calculation is given in **Figure 5.** If for example the UWB pulses are transmitted at a carrier frequency f (e.g. 8 GHz) where $\omega = 2\pi f$, then the estimated PDoA, when the receivers 220, 230 are subject to different delays, is given by

$$\mathrm{PDoA} = \omega\Delta\tau + \omega (\tau 2 - \tau 1).$$

As shown in Figure 5, the PDoA then comprises a first true term $\mathrm{PDoA}_{true}$ and a second error term $\mathrm{PDoA}_{err}$, caused by the receiver delay difference (based on the receiver-specific variation). This delay difference may cause a PDoA distortion, leading to a wrong AoA result. The delay difference may be caused not only by process variation, but also by the fact that different RX gain settings can lead to different delays.

**Figure 6** depicts a simulated delay (y-axis) and a gain setting (x-axis) comparison for a typical UWB RF analog front-end, showing that the delay - while independent of temperature - can vary by up to a few hundreds of pico-second over gain, which is several hundreds of degrees at 8 GHz. In practice, two receivers may operate with a different gain when e.g. the transmitter is closer to one receiver compared to the another (self-interference).

It is seen from the PDoA equation above that, if $\tau 2 = \tau 1$ (in other words, both receivers show the same variation), the estimated PDoA will correspond to the desired one. Thus, the conventional approach to compensate for the receiver-specific variation is trying to make both variations (e.g. delays) equal. A first approach would be a calibration of the receiver-specific delay. Another approach would be a gain equalization, wherein both receivers are forced to have the same gain setting, but this may lead to signal saturation or degraded radar performance (e.g. noise figure or signal-to-noise ratio) and may not solve for the general process delay spread between receivers.

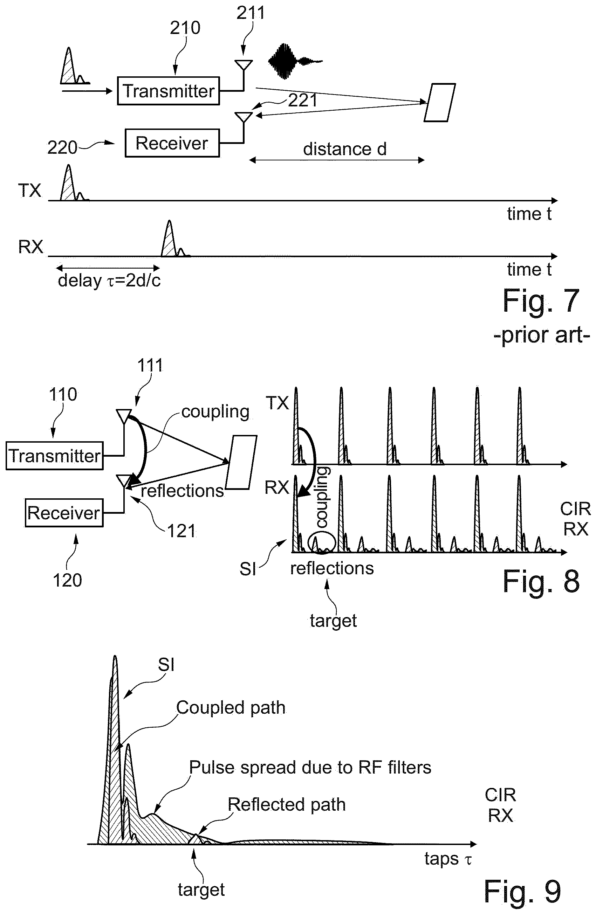

The known principle of a UWB pulse radar system is shown in the example of **Figure 7,** and the coupling between co-located transmitter 110 and receiver 120 is shown in **Figure 8.** The received channel impulse response is computed by coherent integration of the transmitted pulses. The CIR can be modelled as:

$$\mathrm{h}(t,\tau) = \mathrm{h}^{(s)}(\tau) + \rho e^{j2\pi f\_d\,t}\; p\,(\tau - \tau_{tgt})$$

The first term $\mathrm{h}^{(s)}(\tau)$ is the coupled path that is assumed to not change over time (static), and the second term is the target reflection that varies depending on the Doppler frequency $f\_d$ of the target at distance $d = (\tau_{tgt}c)/2$. The reflected signal amplitude is $\rho$ and the transmitted pulse is $p(\tau)$. The coupling peak(s) in the CIR can be termed a self-interference of the receiver.

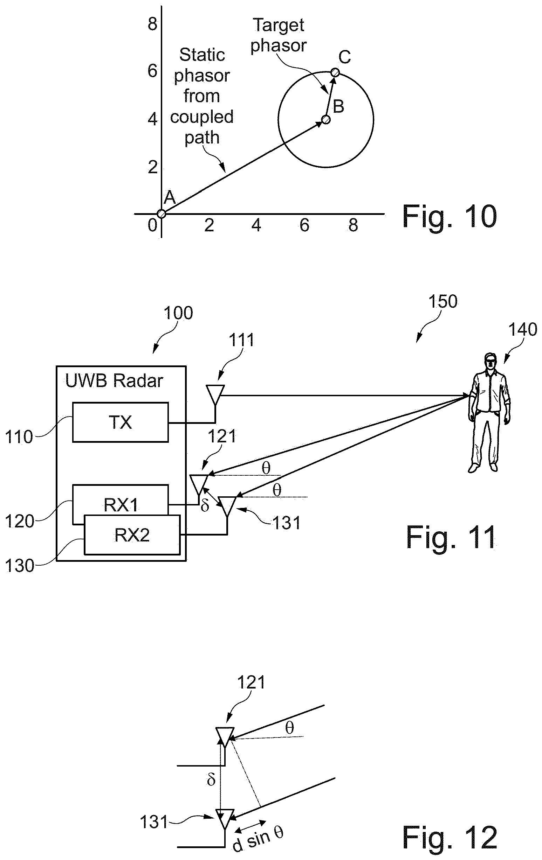

When the coupled path (self-interference) and the reflected signal (from the target) pass for example through RF filters, the RF signal (pulse) can get spread as shown in **Figure 9.** At a given delay $\tau$, this results in a superposition (overlap) of two signals, one from the coupled path and one from the target reflection. In specific cases, a separation may not be possible (see discussion further below). An issue can be that at any given tap $\tau$ of a CIR, the CIR is a summation of the contribution from the coupled path and the contribution from the reflected signal, as shown in **Figure 10.** This figure shows the CIR at tap $\tau$ in the complex plane. The static part of the CIR (which is the coupled path) is a complex number and can be represented by a fixed phasor, or arrow, AB from the origin to that number. The "moving part" of the CIR (which is the target reflection) can be represented by a moving phasor BC. This phasor is moving in the complex plane relative to B. If the target moves sinusoidally, the target phasor will trace a circle as seen in the Figure 10.

**Figure 11** shows the known principle of angle of arrival determination. For a UWB radar system with multiple receivers 120, 130, Figure 11 shows the reflected signal arriving at the different receivers 120, 130, and **Figure 12** shows how the time difference of arrival between the multiple receivers 120, 130 results in a phase difference between the signals received at different receivers. Nevertheless, as discussed above, an accurate determination of the AoA may only be possible if device, in particular receiver, specific variations are compensated.

## SUMMARY OF THE DISCLOSURE

There may be a need to compensate for a device specific variation (in particular a delay or a phase variation) in a radar system in an efficient and reliable manner.

A radar device, a method, and a method of using are provided.

According to an aspect of the present disclosure, it is described a radar device (e.g. a chip of a mobile phone with a UWB functionality), comprising:

 i) a transmitter, configured to transmit an RF signal (e.g. an UWB pulse);
 ii) a first receiver, configured to receive a first reflection (echo) of the RF signal;
 iii) a second receiver, configured to receive a second reflection (in particular with a different phase as the first reflection) of the RF signal; and
 iv) a control device (e.g. a processor, an integrated circuit, etc.), configured to:

  a) determine a first target phase (e.g. from a first target peak in a first CIR) with respect to the first reflection of the RF signal and a first self-interference phase (e.g. from a self-interference peak in the first CIR), and compensate for a first (device, receiver) variation (e.g. a time delay and/or a phase variation) in the first target phase based on the first self-interference phase (e.g. by subtracting the self-interference phase/peak from the target phase/peak) to obtain a compensated first target phase; and/or
  b) determine a second target phase (e.g. from a second target peak in a second CIR) with respect to the second reflection of the RF signal and a second self-interference phase (e.g. from a second self-interference peak from a second CIR), and

compensate for a second (device, receiver) variation in the second target phase based on the second self-interference phase to obtain a compensated second target phase.

Hereby, the first variation is in particular different from the second variation (so that the compensated first target phase and the compensated second target phase are (essentially) free of a (receiver and/or transmitter) variation and directly comparable, in particular without a calibration).

According to a further aspect of the present disclosure, it is described a method for compensating a receiver variation in a radar system, the method comprising:

i) transmitting an RF signal;

ii) receiving a first reflection of the RF signal;

iii) receiving a second reflection of the RF signal;

iv) determining a first target phase with respect to the first reflection of the RF signal and a first self-interference phase;

v) compensating for a first variation in the first target phase based on the first self-interference phase to obtain a compensated first target phase;

vi) determining a second target phase with respect to the second reflection of the RF signal and a second self-interference phase; and

vii) compensating for a second variation in the second target phase based on the second self-interference phase to obtain a compensated second target phase.

In particular, the first variation is different from the second variation.

According to a further aspect of the present disclosure, it is described a use (method of using) a self-interference peak of a channel impulse response (CIR) to compensate a receiver variation (e.g. at least one of a time delay and a phase variation) with respect to a target peak.

In the context of the present document, the term "target" may refer in particular to an entity (e.g. an object, a person, an animal, etc.) to be investigated by radar, in particular regarding a spatial characteristic such as a position, a speed, etc. Accordingly, a "target peak" may be a detected response signal caused by a reflection of a transmitted RF signal from the target. For example, a CIR may be calculated from the reflection of the RF signal and the target peak may be one or more peaks in the CIR that result from the reflection at the target. Based on said target peak, the target phase (phase of the received reflected RF signal) may be determined.

In the context of the present document, the term "self-interference" may refer to a signal that is not caused by said target, but rather from a signal interference within the radar device. An example may be the interference between the transmitter and the receiver of said radar device. Such a self-interference may also be termed spill-over, cross-coupling, cross-talk, etc. A specific example of a self-interference is described for Figures 8 and 9. Within a CIR, one or more self-interference peaks may be visible. Based on one or more self-interference peaks, a self-interference phase may be determined.

According to an exemplary embodiment, the disclosure may be based on the idea that a receiver variation (in particular a delay or a phase variation) in a radar system may be compensated in an efficient and reliable manner, when for each receiver (each comprising its own specific variation) a self-interference phase and a target phase are determined, and a compensated target phase is obtained from the target phase by taking into account the self-interference phase (e.g. by subtraction).

In conventional approaches (see above), receiver variations are tried to be compensated by using (complex) calibration methods. Self-interferences within a radar device are conventionally undesired and tried to be avoided. The present disclosure now teaches a completely different approach (contrary to conventional approaches): self-interferences are required in order to compensate for receiver variations. It has been found by the inventors that the self-interference phase of each receiver shares the same receiver variation as the target phase. Accordingly, each target phase variation may be compensated by the corresponding self-interference phase. In this manner, precise positional measurements based on compensated target phases of two or more receivers may be enabled.

In this manner, a calibration-free compensation of a receiver variation may be provided. The compensated target phases can then be compared directly for the determination of positional characteristics such as the PDoA and (based on the PDoA) the AoA. Since no calibration is required, the system complexity can be reduced, thereby achieving e.g. a lower memory, and no additional algorithms. The described approach may be directly integrated into existing radar devices, in particular wherein loopback mode and/or switches of receivers may not be needed.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

EXEMPLARY EMBODIMENTS

According to an embodiment, the control device is further configured to:
determine a (positional/spatial) characteristic of the target (e.g. a position in space, a speed, an acceleration, a movement) based on the compensated first target phase and the compensated second target phase. Since the first and second (or more) target phases are compensated, accurate spatial positions (within the radar system) may be determined.

According to an embodiment, the determination of the target characteristic comprises determining a PDoA. The procedure is e.g. described for Figures 1 and 2. Based on the PDoA, an AoA may be determined, see e.g. Figures 11 and 12. The AoA may be an established parameter to determine the position or another characteristic of a target in space. The disclosure may e.g. allow for tracking of object/human/vehicle targets in two dimensions by estimating the angle in addition to the distance of the target. Applications may further include several radar use cases such as breathing detection, person tracking, camera autofocus, etc.

According to an embodiment, the first variation and/or the second variation comprises at least one of: a time delay, a phase variation. The variation may be a device specific variation of the transmitter and/or receiver and may relate to a time delay and/or a phase variation. Since a self-interference experiences the same variation as a target, an efficient compensation may be possible. According to an embodiment, the first variation is specific for the first receiver and/or the second variation is specific for the second receiver and/or a further variation is specific for the transmitter.

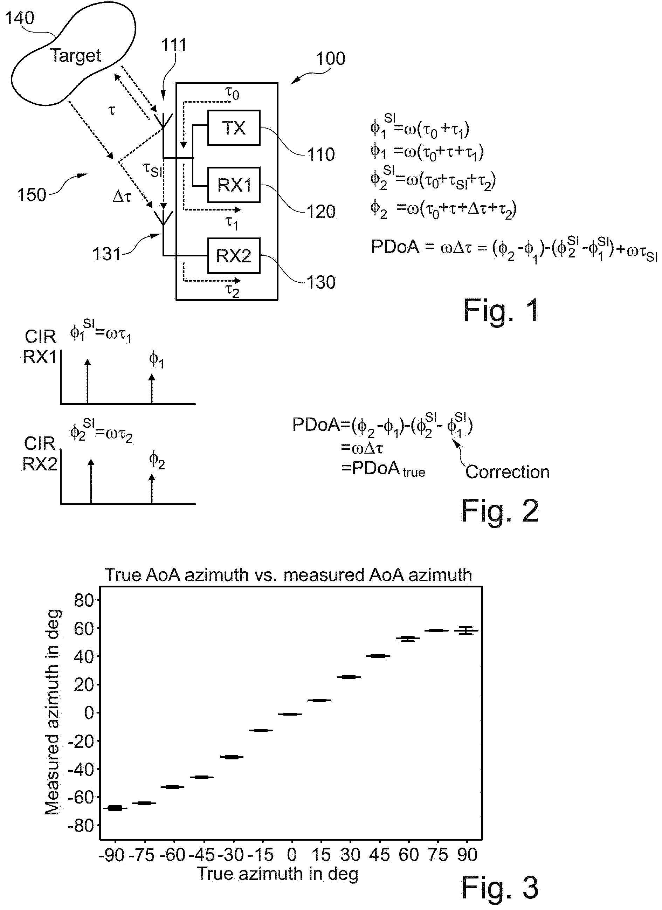

According to an embodiment, the control device is further configured to compensate for a fixed self-interference delay and/or phase. Thereby, the accuracy may be improved, see for example the formula in Figure 1:

$$PDoA = (\Phi 2 - \Phi 1) - (\Phi 2^{SI} - \Phi 1^{SI}) + \omega\, \tau^{SI}$$

The additional delay $\tau^{SI}$ (or phase $\omega\, \tau^{SI}$) can be determined and compensated, e.g. as part of the antenna measurement. This SI delay is hereby a fixed value that may not depend on device (chip)-conditions (e.g. process spread).

According to an embodiment, the radar device is an ultra-wide band, UWB, device. Thereby, an established and economically important standard can be directly applied.

In the context of the present document, the term "ultra-wide band communication" (or ultra-wideband) may refer to a radio technology that can use a very low energy level for short-range, high-bandwidth communications over a large portion of the radio spectrum. UWB may refer to a technology for transmitting information spread over a large bandwidth (> 500 MHz). UWB may be defined as an antenna transmission for which emitted signal bandwidth exceeds the lesser of 500 MHz or 20% of the arithmetic center frequency. UWB transmissions may transmit information by generating radio energy at specific time intervals and occupying a large bandwidth, thus enabling pulse-position or time modulation. The range of UWB may be for example in the range of 10th of meters. An UWB (RF) ranging system may employ the Time-of-Flight principle to determine the distance between a mobile device and a target device (e.g. a car to be opened) and/or anchor devices (markers) on the target device. Usually, a transceiver's transmitter sends out a waveform, commonly a chirp or a pulse, which is either reflected by an object or retransmitted by a second transceiver. Based on the amount of time it takes for the reflection or retransmission to reach the originating transceiver's receiver, the distance between the objects can be calculated. The so determined range between the receiver and the transmitter is then used as a control point (to enable access). In the same manner, payload may be transferred using UWB. In the present context, "UWB communication" includes impulse-radio-ultra-wide band (IR-UWB) (see for example the standards IEEE802.15.4a and IEEE802.15.4z).

In another embodiment, another wireless communication scheme (in particular according to a standard) may be applied, for example WiFi, NFC, RFID, etc.

According to an embodiment, the RF signal comprises at least one pulse, in particular a sequence of pulses. According to an embodiment, a target phase is based on one or more target peaks. According to an embodiment, a self-interference phase is based on one or more self-interference peaks.

According to an embodiment, the control device is further configured to:
i) determine a first channel impulse response (CIR1) from the reflection of the RF signal obtained at the first receiver, and ii) determine a second channel impulse response (CIR2) from the reflection of the RF signal obtained at the second receiver.

According to an embodiment, the first target phase is associated with at least one first target peak in the first CIR, and the first self-interference phase is associated with at least one first self-interference peak in the first CIR. According to an embodiment, the second target phase is associated with at least one second target peak in the second CIR, and the second self-interference phase is associated with at least one second self-interference peak in the second CIR.

According to an embodiment, at least one of the first self-interference phase and the second self-interference phase is at least partially generated by a coupling (see e.g. Figures 8 and 9) between the transmitter and at least one of the first receiver and the second receiver.

According to an embodiment, the transmitter is associated with the first receiver or the second receiver. According to an embodiment, the transmitter is in closer spatial proximity with one of the first receiver and the second receiver than with the other. According to an embodiment, the transmitter and the first receiver or the second receiver share a common antenna. According to an embodiment, the transmitter and the first receiver and/or the second receiver are implemented in the same unit or in different units.

According to an embodiment, there is described a communication system, comprising:

i) a radar device as described above; and
ii) a target from which the RF signal is reflected, wherein the target is a mobile target or an immobile target.

According to an embodiment, determining the at least one of the first target phase and the second target phase comprises: compensate (e.g. by subtraction) for a signal overlap (superposition, clutter) based on a reference response, in particular a reference CIR, of a specific time instance ($\tau_0$). According to an embodiment, the specific time instance ($\tau_0$) is chosen such that a Doppler-effect is present (i.e. a moving target).

In an example, the PDoA f can be computed from the CIR and can be mapped back to the AoA $\theta$. CIRs for the two receivers can be modelled as:

$$h_{rx1}(t,\tau) = h_{rx1}{}^{(s)}(\tau) + \rho e^{j2\pi f\_d\,t}\,p\,(\tau{-}\tau_{tgt})$$

$$h_{rx2}(t,\tau) = h_{rx2}{}^{(s)}(\tau) + \rho e^{j2\pi f\_d\,t}\,p(\tau{-}\tau_{tgt})\,e^{j\xi}$$

However, with strong coupling between the co-located transmitter and receivers, the PDoA computation may not be straightforward since the coupled path (self-interference), which is different for the different receiver paths, may strongly bias the phase of the reflected signal.

Estimating the AoA in line-of-sight for a radar system can be done by computing the PDoA between multiple receivers. However, for co-located transmitter and receivers, there may be strong coupling from transmitter antenna to receiver antennas, which may make the PDoA computation difficult. The described approach, however, may estimate AoA in presence of strong coupling from transmitter to receiver (including overlap/superposition), using a channel impulse response that includes the effect of the coupled path.

Form the equations above, one can see that the PDoA cannot be computed from $h_{rx1}(t,\tau)$ and $h_{rx2}(t,\tau)$ without removing $h_{rx1}{}^{(s)}(\tau)$ and $h_{rx2}{}^{(s)}(\tau)$. A process of removing the (overlapping) coupled path is known as "clutter removal". If $h_{rx1}{}^{(s)}(\tau)$ and $h_{rx2}{}^{(s)}(\tau)$ is not accurately estimated and removed, the resulting residual from clutter removal will result in incorrect PDoA. One widely used strategy to remove the coupled path contribution is to estimate an average CIR and subtract the average from each CIR:

$$\check{h}_{rx1}(t,\tau) = h_{rx1}(t,\tau) - \overline{h}_{rx1}(\tau) = h_{rx1}{}^{(s)}(\tau) - \overline{h}_{rx1}(\tau) + \rho e^{j2\pi f\_d\,t}\,p\,(\tau{-}\tau_{tgt}\,).$$

It can be seen that the residual $h_{rx1}{}^{(s)}(\tau)$ - $\overline{h}_{rx1}(\tau)$ will still impact the PDoA computation unless

$$\rho \gg \left| h_{rx1}{}^{(s)}(\tau) - \overline{h}_{rx1}(\tau) \right|$$
.

It has now been found by the inventors that the accuracy of PDoA estimation may be highly improved in an efficient manner. This approach may be especially useful, when the target peak (target phase) cannot be directly determined, for example due to strong coupling and signal/peak overlap (clutter, self-interference, see e.g. Figure 9).

Hereby, the CIR at a time instance $t_0$ is considered as the reference CIR:

$$h_{rx1}{}^{(ref)}(\tau) = h_{rx1}(t_0,\tau) = h_{rx1}{}^{(s)}(\tau) + \rho e^{j2\pi f\_d\,t\_0}\,p\,(\tau{-}\tau_{tgt})$$

$$h_{rx2}{}^{(ref)}(\tau) = h_{rx2}(t_0,\tau) = h_{rx2}{}^{(s)}(\tau) + \rho e^{j2\pi f\_d\,t\_0}\,p\,(\tau{-}\tau_{tgt})\,e^{j\xi}$$

and it can be computed:

$$\check{h}_{rx1}(t,\tau) = h_{rx1}(t,\tau) - h_{rx1}{}^{(ref)}(\tau) = \rho \cdot (e^{j2\pi f\_d\,t} - e^{j2\pi f\_d\,t\_0})\,p(\tau{-}\tau_{tgt})$$

$$\check{h}_{rx2}(t,\tau) = h_{rx2}(t,\tau) - h_{rx2}{}^{(ref)}(\tau) = \rho \cdot (e^{j2\pi f\_d\,t} - e^{j2\pi f\_d\,t\_0})\,p(\tau{-}\tau_{tgt})\,e^{j\xi}$$

One can see that $\check{h}_{rx1}(t,\tau) = \check{h}_{rx2}(t,\tau) e^{j\xi}$ and that one may now compute the PDoA accurately.

Hereby, the choice of $t_0$ could affect the accuracy of the PDoA computation, since for a Doppler frequency $f\_d$ that is close to 0, $(e^{j2\pi f\_d\,t} - e^{j2\pi f\_d\,t\_0})$ would be also close to 0. However, in the case of moving targets (for example human targets with motion that have non-zero Doppler (either breathing or walking)), an appropriate window can be chosen based on expected Doppler effect for the given use case. Then, $t_0$ can be chosen to be the first CIR in the window.

In an example, the PDoA can then be computed by finding the angle of $\Sigma_n \check{h}_{rx1}(n, \tau_{tgt}) \check{h}_{rx2}(n, \tau_{tgt})$, where one can replace $t = n \times RFRI$ with the discrete time index n that runs over all the CIRs within a given window.

According to a specific embodiment, the disclosure allows for PDoA estimation without having to separately estimate the coupling from the radar transmitter to the co-located radar receiver. According to an example, the disclosure can be implemented using both phases and delays. According to an example, the self-interference delay may simply be estimated from the (known) antenna separation. According to an example, at least two phases with each antenna are determined, and use is made of the cross-coupling (self-interference). According to an example, (essentially) no calibration is needed.

BRIEF DESCRIPTION OF THE DRAWINGS

Figure 1 illustrates a radar system with a radar device and a target, according to an exemplary embodiment of the disclosure.

Figure 2 illustrates channel impulse responses with respective self-interferences, according to an exemplary embodiment of the disclosure.

Figure 3 illustrates a comparison of measured and true angles of arrival, according to an exemplary embodiment of the disclosure.

Figure 4 illustrates a conventional radar system.

Figure 5 illustrates conventional channel impulse responses.

Figure 6 illustrates a comparison of the gain setting and the delay, according to a conventional radar system.

Figure 7 illustrates schematically the known principle of an UWB radar system.

Figure 8 illustrates a coupling between a transmitter and a receiver of a radar system, according to an exemplary embodiment of the disclosure.

Figure 9 illustrates a channel impulse response with an overlap of self-interference peak and target peak, according to an exemplary embodiment of the disclosure.

Figure 10 illustrates two phasors in the complex plane, one static phasor from the coupled path and one moving phasor from the target reflection.

Figures 11 and 12 respectively illustrate the known principle of angle of arrival measurements.

DETAILED DESCRIPTION OF THE DRAWINGS

Before referring to the drawings, embodiments will be described in further detail, some basic considerations will be summarized based on which embodiments of the disclosure have been developed.

According to an exemplary embodiment, the disclosure may comprise at least one of the following aspects:

i) determining a target peak in a first and a second channel impulse response.

ii) determining a self-interference peak in the first and the second channel impulse response.

iii) computing phases/PDoA associated with the target peak and the self-interference peak.

iv) compensating a delay/phase variation in the target peak phases/PDoA based on the self-interference phases/PDoA.

**Figure** 1 shows a radar system 150 with a radar device 100 (e.g. an UWB radar chip) and a target 140, according to an exemplary embodiment of the disclosure. The radar device 100 comprises a transmitter 110 with a transmitter antenna 111, configured to transmit an RF signal, here an UWB pulse. The radar device 100 further comprises a first receiver 120, configured to receive a first reflection (at the target 140) of the RF signal. In this embodiment, the transmitter 110 and the first receiver 120 are associated with each other and share a common antenna 111 (e.g. a common RF pin). The transmitter 110 is hence spatially closer to the first receiver 120 than to a second receiver 130 (here on-chip co-allocated), configured to receive a second reflection of the RF signal, which is different (in phase) from the first reflection. The transmitter 110 and the receivers 120, 130 are coupled with a control device (not shown) which determines a PDoA from the different phases of the first reflection and the second reflection.

As the transmitter 110 is strongly coupled with the first receiver 120 but loosely coupled with the second receiver 130, the two receiver 120, 130 chains will have different gains, leading to an issue demonstrated in Figure 5 (see description above), due to receiver variations. The Figure also shows the delay $\tau_0$ through the transmitter 110 (which also depends on the process) as well as the delay $\tau_{SI}$ due to the SI path. As seen by the equation shown in the Figure, by using the self-interference SI as a reference, the delays on the transmitter 110, the first receiver 120, and the second receiver 130 are completely cancelled. The additional delay $\tau_{SI}$ (or phase $\omega\tau_{SI}$) can be determined and compensated as part of the antenna measurement. This SI delay is hereby a fixed value that does not depend on device (chip)-conditions (e.g. process spread).

**Figure** 2 illustrates a first channel impulse response (CIR) of a first receiver RX1 and a second channel impulse response of a second receiver RX2, according to an exemplary embodiment of the disclosure. In addition to the target peaks (compare Figure 5), Figure 2 also shows the self-interference (SI) peaks (also called spill-over, cross-coupling, cross-talk, own TX etc), caused by coupling between the transmitter 110 and receiver 120 as in Figure 1. It has now been recognized by the inventors that the SI propagating through the first receiver 120 and the second receiver 130 experiences the same variable delay (the same variation). Thus, by e.g. subtracting the SI phases from the respective target phases, the delay variation is completely cancelled; in other words, compensating each variable delay in the target phase is done by using the SI phases as a reference.

**Figure** 3 illustrates a comparison of measured (y-axis) and true (x-axis) angles of arrival, according to an exemplary embodiment of the disclosure. It can be seen that very accurate angle determination is possible. Further, a monolithic curve can be observed as would be the case of a calibrated system. It follows that the described (calibration-free compensated approach) may yield comparable or better results than conventional approaches, yet without cost-consuming calibration processes.

Reference signs

| | |
|---|---|
| 100 | Radar device |
| 110 | Transmitter |
| 111 | Transmitter antenna, common antenna |
| 120 | First receiver |
| 121 | First receiver antenna |
| 130 | Second receiver |
| 131 | Second receiver antenna |
| 140 | Target |
| 150 | Radar system |

| | |
|---|---|
| 200 | Conventional radar system |
| 210 | Conventional transmitter |
| 211 | Conventional transmitter antenna |
| 220 | Conventional first receiver |
| 221 | Conventional first receiver antenna |
| 230 | Conventional second receiver |
| 231 | Conventional second receiver antenna |
| 240 | Conventional target |

**Claims**

1.  A radar device (100), comprising:

    a transmitter (110), configured to transmit an RF signal;
    a first receiver (120), configured to receive a first reflection of the RF signal;
    a second receiver (130), configured to receive a second reflection of the RF signal; and
    a control device, configured to:

    a) determine a first target phase ($\Phi1$) with respect to the first reflection of the RF signal, and a first self-interference phase ($\Phi1^{SI}$), and
    compensate for a first receiver variation in the first target phase ($\Phi1$) based on the first self-interference phase ($\Phi1^{SI}$) to obtain a compensated first target phase; and
    b) determine a second target phase ($\Phi2$) with respect to the second reflection of the RF signal and a second

self-interference phase ($\Phi2^{SI}$), and

   compensate for a second receiver variation in the second target phase ($\Phi2$) based on the second self-interference phase ($\Phi2^{SI}$) to obtain a compensated second target phase;
   wherein the first receiver variation is different from the second receiver variation.

2. The radar device (100) according to claim 1, wherein the control device is further configured to:
   determine a target characteristic based on the compensated first target phase and the compensated second target phase.

3. The radar device (100) according to claim 2,
   wherein the determination of the target characteristic comprises at least one of:

   a phase difference of arrival, PDoA,
   an angle of arrival, AoA.

4. The radar device (100) according to one of the preceding claims,
   wherein at least one of the first receiver variation and the second receiver variation comprises at least one of:

   a time delay ($\tau1$, $\tau2$),
   a phase variation.

5. The radar device (100) according to one of the preceding claims, wherein the control device is further configured to compensate for a at least one of:

   a fixed self-interference delay,
   a fixed self-interference phase.

6. The radar device (100) according to one of the preceding claims,
   wherein the radar device (100) is an ultra-wide band, UWB, device.

7. The radar device (100) according to one of the preceding claims, wherein the control device is further configured to:

   determine a first channel impulse response (CIR1) from the first reflection of the RF signal, and
   determine a second channel impulse response (CIR2) from the second reflection of the RF signal,
   wherein the first target phase ($\Phi1$) is associated with at least one first target peak in the first CIR, and wherein the first self-interference phase ($\Phi1^{SI}$) is associated with at least one first self-interference peak in the first CIR, and wherein the second target phase ($\Phi2$) is associated with at least one second target peak in the second CIR, and wherein the second self-interference phase ($\Phi2^{SI}$) is associated with at least one second self-interference peak in the second CIR.

8. The radar device (100) according to one of the preceding claims,
   wherein at least one of the first self-interference phase ($\Phi1^{SI}$) and the second self-interference phase ($\Phi2^{SI}$) is at least partially generated by a coupling between the transmitter (110) and at least one of the first receiver (120) and the second receiver (130).

9. The radar device (100) according to one of the preceding claims, comprising at least one of the following features:

   wherein the transmitter (110) is associated with the first receiver (120) or the second receiver (130);
   wherein the transmitter (110) is in closer spatial proximity with one of the first receiver (120) and the second receiver (130) than with the other;
   wherein the transmitter (110) and the first receiver (120) or the second receiver (130) share a common antenna (111).

10. The radar device (100) according to one of the preceding claims,
    wherein the determination of at least one of the first target phase ($\Phi1$) and the second target phase ($\Phi2$) comprises:
    compensate for a signal overlap based on a reference response of a specific time instance ($\tau_0$).

**11.** The radar device (100) according to claim 10,
wherein the specific time instance ($\tau_0$) is chosen such that a Doppler-effect is present.

**12.** A communication system (150), comprising:

a radar device (100) according to one of the preceding claims; and
a target (140) from which the RF signal is reflected, wherein the target (140) is a mobile target or an immobile target.

**13.** A method for compensating a receiver variation in a radar system (150), the method comprising:

transmitting an RF signal;
receiving a first reflection of the RF signal;
receiving a second reflection of the RF signal;
determining a first target phase ($\Phi1$) with respect to the first reflection of the RF signal and a first self-interference phase ($\Phi1^{SI}$);
compensating for a first variation in the first target phase ($\Phi1$) based on the first self-interference phase ($\Phi1^{SI}$) to obtain a compensated first target phase;
determining a second target phase ($\Phi2$) with respect to the second reflection of the RF signal and a second self-interference phase ($\Phi2^{SI}$),
compensating for a second variation in the second target phase ($\Phi2$) based on the second self-interference phase ($\Phi2^{SI}$) to obtain a compensated second target phase;
wherein the first variation is different from the second receiver variation.

**14.** The method according to claim 13,
wherein the method is calibration-free.

**15.** Using a self-interference peak of a channel impulse response, CIR, to compensate at least one of a time delay and a phase variation with respect to a target peak.

**Amended claims in accordance with Rule 137(2) EPC.**

**1.** A radar device (100), comprising:

a transmitter (110), configured to transmit an RF signal;
a first receiver (120), configured to receive a first reflection of the RF signal;
a second receiver (130), configured to receive a second reflection of the RF signal; and
a control device, configured to:

a) determine a first target phase ($\Phi1$) with respect to the first reflection of the RF signal, and a first self-interference phase ($\Phi1^{SI}$), and
compensate for a first receiver variation in the first target phase ($\Phi1$) based on subtracting the first self-interference phase ($\Phi1^{SI}$) from the first target phase ($\Phi1$) to obtain a compensated first target phase; and
b) determine a second target phase ($\Phi2$) with respect to the second reflection of the RF signal and a second self-interference phase ($\Phi2^{SI}$), and

compensate for a second receiver variation in the second target phase ($\Phi2$) based on subtracting the second self-interference phase ($\Phi2^{SI}$) from the second target phase ($\Phi2$) to obtain a compensated second target phase;
wherein the first receiver variation is different from the second receiver variation.

**2.** The radar device (100) according to claim 1, wherein the control device is further configured to:
determine a target characteristic based on the compensated first target phase and the compensated second target phase.

**3.** The radar device (100) according to claim 2,
wherein the determination of the target characteristic comprises at least one of:

a phase difference of arrival, PDoA,
an angle of arrival, AoA.

4. The radar device (100) according to one of the preceding claims,
wherein at least one of the first receiver variation and the second receiver variation comprises at least one of:

a time delay ($\tau 1$, $\tau 2$),
a phase variation.

5. The radar device (100) according to one of the preceding claims, wherein the control device is further configured to compensate for a at least one of:

a fixed self-interference delay,
a fixed self-interference phase.

6. The radar device (100) according to one of the preceding claims,
wherein the radar device (100) is an ultra-wide band, UWB, device.

7. The radar device (100) according to one of the preceding claims, wherein the control device is further configured to:

determine a first channel impulse response (CIR1) from the first reflection of the RF signal,
and
determine a second channel impulse response (CIR2) from the second reflection of the RF signal,
wherein the first target phase ($\Phi 1$) is associated with at least one first target peak in the first CIR, and wherein the first self-interference phase ($\Phi 1^{SI}$) is associated with at least one first self-interference peak in the first CIR, and wherein the second target phase ($\Phi 2$) is associated with at least one second target peak in the second CIR, and wherein the second self-interference phase ($\Phi 2^{SI}$) is associated with at least one second self-interference peak in the second CIR.

8. The radar device (100) according to one of the preceding claims,
wherein at least one of the first self-interference phase ($\Phi 1^{SI}$) and the second self-interference phase ($\Phi 2^{SI}$) is at least partially generated by a coupling between the transmitter (110) and at least one of the first receiver (120) and the second receiver (130).

9. The radar device (100) according to one of the preceding claims, comprising at least one of the following features:

wherein the transmitter (110) is associated with the first receiver (120) or the second receiver (130);
wherein the transmitter (110) is in closer spatial proximity with one of the first receiver (120) and the second receiver (130) than with the other;
wherein the transmitter (110) and the first receiver (120) or the second receiver (130) share a common antenna (111).

10. The radar device (100) according to one of the preceding claims,
wherein the determination of at least one of the first target phase ($\Phi 1$) and the second target phase ($\Phi 2$) comprises:
compensate for a signal overlap based on a reference response of a specific time instance ($\tau_0$).

11. The radar device (100) according to claim 10,
wherein the specific time instance ($\tau_0$) is chosen such that a Doppler-effect is present.

12. A communication system (150), comprising:

a radar device (100) according to one of the preceding claims; and
a target (140) from which the RF signal is reflected, wherein the target (140) is a mobile target or an immobile target.

13. A method for compensating a receiver variation in a radar system (150), the method comprising:

transmitting an RF signal;

receiving a first reflection of the RF signal;

receiving a second reflection of the RF signal;

determining a first target phase ($\Phi 1$) with respect to the first reflection of the RF signal and a first self-interference phase ($\Phi 1^{SI}$);

compensating for a first variation in the first target phase ($\Phi 1$) based on subtracting the first self-interference phase ($\Phi 1^{SI}$) from the first target phase ($\Phi 1$) to obtain a compensated first target phase;

determining a second target phase ($\Phi 2$) with respect to the second reflection of the RF signal and a second self-interference phase ($\Phi 2^{SI}$)

compensating for a second variation in the second target phase ($\Phi 2$) based on subtracting the second self-interference phase ($\Phi 2^{SI}$) from the second target phase ($\Phi 2$) to obtain a compensated second target phase;

wherein the first variation is different from the second receiver variation.

14. The method according to claim 13,
wherein the method is calibration-free.

$$\phi_1^{SI} = \omega(\tau_0 + \tau_1)$$
$$\phi_1 = \omega(\tau_0 + \tau + \tau_1)$$
$$\phi_2^{SI} = \omega(\tau_0 + \tau_{SI} + \tau_2)$$
$$\phi_2 = \omega(\tau_0 + \tau + \Delta\tau + \tau_2)$$

$$PDoA = \omega\Delta\tau = (\phi_2 - \phi_1) - (\phi_2^{SI} - \phi_1^{SI}) + \omega\tau_{SI}$$

Fig. 1

$$PDoA = (\phi_2 - \phi_1) - (\phi_2^{SI} - \phi_1^{SI})$$
$$= \omega\Delta\tau$$
$$= PDoA_{true}$$

Correction

Fig. 2

True AoA azimuth vs. measured AoA azimuth

Fig. 3

PDoA=$\phi_2$-$\phi_1$

## Fig. 4
-prior art-

CIR RX1 $\phi_1=\omega(\tau+\tau_1)$

CIR RX2 $\phi_2=\omega(\tau+\Delta\tau+\tau_2)$

PDoA=$\phi_2$-$\phi_1$
$=\omega(\tau+\Delta\tau+\tau_2)-\omega(\tau+\tau_1)$
$=\omega\Delta\tau+\omega(\tau_2-\tau_1)$
$=PDoA_{true}+PDoA_{error}$

Desired      Error

Make $\tau_1=\tau_2\rightarrow PDoA=PDoA_{true}=\omega\Delta\tau$

## Fig. 5
-prior art-

## Fig. 6

211

210

Transmitter

221

Receiver

220

distance d

TX

time t

RX

time t

delay τ=2d/c

Fig. 7

-prior art-

111

110

coupling

Transmitter

reflections

Receiver

121

120

TX

RX

coupling

CIR RX

SI

reflections

target

Fig. 8

SI

Coupled path

Pulse spread due to RF filters

Reflected path

CIR RX

taps τ

target

Fig. 9

Fig. 10

Fig. 11

Fig. 12

Europäisches
Patentamt

European
Patent Office

Office européen
des brevets

# EUROPEAN SEARCH REPORT

**Application Number**

EP 24 15 3204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 807 522 B1 (DAEGU GYEONGBUK INST SCIENCE & TECH [KR]) 12 December 2017 (2017-12-12) * the whole document * ----- | 1-15 | INV. G01S7/40 G01S13/42 |
| A | US 2013/113653 A1 (KISHIGAMI TAKAAKI [JP] ET AL) 9 May 2013 (2013-05-09) * the whole document * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 13 June 2024 | Rudolf, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 3204

This annex lists the patent family members relating to the patent documents cited in  the above-mentioned European search report.
The members are as contained in the European Patent Office EDP file on
The European Patent Office is in no way liable for these particulars which are merely given for the purpose of information.

13-06-2024

| Patent document cited in search report | | Publication date | Patent family member(s) | | Publication date |
|---|---|---|---|---|---|
| KR 101807522 | B1 | 12-12-2017 | NONE | | |
| US 2013113653 | A1 | 09-05-2013 | CN | 102959427 A | 06-03-2013 |
| | | | EP | 2594955 A1 | 22-05-2013 |
| | | | JP | 5884059 B2 | 15-03-2016 |
| | | | JP | WO2012008110 A1 | 05-09-2013 |
| | | | US | 2013113653 A1 | 09-05-2013 |
| | | | WO | 2012008110 A1 | 19-01-2012 |

EPO FORM P0459

For more details about this annex : see Official Journal of the European Patent Office, No. 12/82